# EUROPEAN PATENT APPLICATION

(11) **EP 4 760 616 A1**
(43) Date of publication of application: **17.06.2026**
(21) Application number: 23951420.1
(22) Date of filing: 04.09.2023
(51) Int. Cl.: G06Q 10/20

(54) **FAILURE DIAGNOSIS DEVICE, FAILURE DIAGNOSIS METHOD, FAILURE DIAGNOSIS PROGRAM, AND FAILURE DIAGNOSIS SYSTEM**

(71) Applicant: Mitsubishi Electric Corporation, Tokyo 100-8310 (JP)
(72) Inventor: KIKUZAWA, Takashi, Tokyo 100-8310 (JP); ITO, Hitomi, Tokyo 100-8310 (JP); YASUI, Ryota, Tokyo 100-8310 (JP)
(74) Representative: Pfenning, Meinig & Partner mbB
(86) International application number: PCT/JP2023/032241
(87) International publication number: WO 2025/052515

(57) **Abstract**

An abnormal data reception unit (110) receives abnormal data. A fault case selection unit (121) selects from a fault case database (191), a fault case associated with abnormal information included in the abnormal data. A fault condition acquisition unit (122) acquires from a fault condition database (192), a fault condition associated with the selected fault case. An environmental information acquisition unit (130) acquires environmental information. A fault condition determination unit (123) determines whether or not the fault condition is satisfied based on the environmental information or sensor data included in the abnormal data. A diagnosis result output unit (140) outputs a diagnosis result.

## Description

### Technical Field

The present disclosure relates to fault diagnosis for a device in which an anomaly has occurred.

### Background Art

Patent Literature 1 proposes the following fault diagnosis system. The fault diagnosis system predicts equipment fault by machine learning, using sensor data acquired from the device and a repair history indicating past repairs.

### Citation List

### Patent Literature

Patent Literature 1: JP 2022-008107 A

### Summary of Invention

### Technical Problem

Conventional fault diagnosis is unable to diagnose a fault due to an environmental factor because the conventional fault diagnosis cannot grasp an environment that cannot be detected by a sensor of the device.

The present disclosure aims to enable diagnosis of a fault due to an environmental factor.

### Solution to Problem

A fault diagnosis apparatus according to the present disclosure includes:
an abnormal data reception unit to receive abnormal data that includes abnormal information of an anomaly that has occurred in a target device and sensor data acquired in the target device;
a fault case selection unit to select from a fault case database indicating relations between abnormal informations of anomalies that may occur in the target device and fault cases, a fault case related to the same abnormal information as the abnormal information included in the abnormal data;
a fault condition acquisition unit to acquire from a fault condition database indicating relations between fault cases and fault conditions, a fault condition associated with the same fault case as the selected fault case;
an environmental information acquisition unit to acquire environmental information of an external environment of the target device;
a fault condition determination unit, when the selected fault case is an environmental factor case which is a fault case due to an external environment of the target device, to determine whether or not the acquired fault condition is satisfied based on the acquired environmental information, and when the selected fault case is not the environmental factor case, to determine whether or not the acquired fault condition is satisfied based on the sensor data included in the abnormal data; and
a diagnosis result output unit to output a diagnosis result indicating information related to a determination result.

### Advantageous Effects of Invention

According to the present disclosure, the aim is to enable diagnosis of a fault due to an environmental factor.

### Brief Description of Drawings

Fig. 1 is a diagram of a configuration of a fault diagnosis apparatus 100 in Embodiment 1.
Fig. 2 is a diagram of a configuration of a fault diagnosis system 200 in Embodiment 1.
Fig. 3 is a flowchart of a fault diagnosis method in Embodiment 1.
Fig. 4 is a flowchart of the fault diagnosis method in Embodiment 1.
Fig. 5 is a diagram illustrating an example of a fault case database 191 in Embodiment 1.
Fig. 6 is a diagram illustrating an example of a diagnosis result in Embodiment 1.
Fig. 7 is a diagram of a configuration of the fault diagnosis system 200 in Embodiment 2.
Fig. 8 is a flowchart of the fault diagnosis method in Embodiment 2.
Fig. 9 is a flowchart of the fault diagnosis method in Embodiment 3.
Fig. 10 is a flowchart of a verification method in Embodiment 4.
Fig. 11 is a diagram illustrating an example of the fault case database 191 in Embodiment 4.
Fig. 12 is a diagram illustrating an example of a fault condition database 192 in Embodiment 4.
Fig. 13 is a diagram of a configuration of the fault diagnosis system 200 in Embodiment 5.
Fig. 14 is a flowchart of the fault diagnosis method in Embodiment 5.
Fig. 15 is a diagram of a hardware configuration of the fault diagnosis apparatus 100 in the embodiments.

### Description of Embodiments

In the embodiments and drawings, the same elements or corresponding elements are denoted by the same reference sign. Description of an element denoted by the same reference sign as that of an element that has been described will be suitably omitted or simplified. Arrows in diagrams mainly indicate flows of data or flows of processing.

### Embodiment 1.

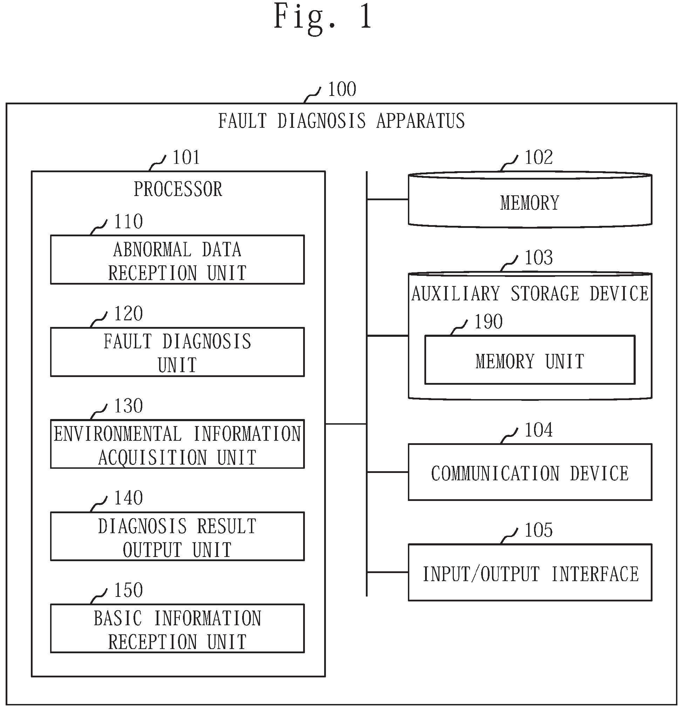

A fault diagnosis apparatus 100 will be described based on Figs. 1 to 4.

### *** Description of Configuration ***

A configuration of the fault diagnosis apparatus 100 will be described based on Fig. 1.

The fault diagnosis apparatus 100 is a computer that includes pieces of hardware such as an abnormal data reception unit 110, a fault diagnosis unit 120, an environmental information acquisition unit 130, a diagnosis result output unit 140, and a basic information reception unit 150. These pieces of hardware are connected with one another through signal lines.

A processor 101 is an IC that performs arithmetic processing, and controls other pieces of hardware. The processor 101 is, for example, a CPU.

IC is an abbreviation for Integrated Circuit.

CPU is an abbreviation for Central Processing Unit.

A memory 102 is a volatile or non-volatile storage device. The memory 102 is also referred to as a main storage device or a main memory. The memory 102 is, for example, an RAM. Data stored in the memory 102 is saved in an auxiliary storage device 103 as necessary.

RAM is an abbreviation for Random Access Memory.

The auxiliary storage device 103 is a non-volatile storage device. The auxiliary storage device 103 is, for example, an ROM, an HDD, a flash memory, or a combination of these. Data stored in the auxiliary storage device 103 is loaded into memory 102 as necessary.

ROM is an abbreviation for Read Only Memory.

HDD is an abbreviation for Hard Disk Drive.

A communication device 104 is a receiver and a transmitter. The communication device 104 is, for example, a communication chip or an NIC. Communication of the fault diagnosis apparatus 100 is performed using the communication device 104.

NIC is abbreviation for Network Interface Card.

An input/output interface 105 is a port to which an input device and an output device are connected. The input/output interface 105 is, for example, a USB terminal, the input device is, for example, a keyboard or a mouse, and the output device is, for example, a display. Input and output of the fault diagnosis apparatus 100 is performed using the input/output interface 105.

USB is an abbreviation for Universal Serial Bus.

The fault diagnosis apparatus 100 includes elements such as the abnormal data reception unit 110, the fault diagnosis unit 120, the environmental information acquisition unit 130, the diagnosis result output unit 140, and the basic information reception unit 150. These elements are implemented by software.

The auxiliary storage device 103 stores a fault diagnosis program for causing the computer to function as the abnormal data reception unit 110, the fault diagnosis unit 120, the environmental information acquisition unit 130, the diagnosis result output unit 140, and the basic information reception unit 150. The fault diagnosis program is loaded into the memory 102 and executed by the processor 101.

The auxiliary storage device 103 further stores an OS. At least a part of the OS is loaded into the memory 102 and executed by the processor 101.

While executing the OS, the processor 101 executes the fault diagnosis program.

OS is an abbreviation for Operating System.

Input and output data of the fault diagnosis program is stored in a memory unit 190.

The auxiliary storage device 103 functions as the memory unit 190.

However, storage devices such as the memory 102, a register in the processor 101, and a cache memory in the processor 101 may also function as the memory unit 190 instead of the auxiliary storage device 103 or together with the auxiliary storage device 103.

The fault diagnosis program can be recorded (stored) in a non-volatile recording medium such as an optical disc or a flash memory, in a computer readable format.

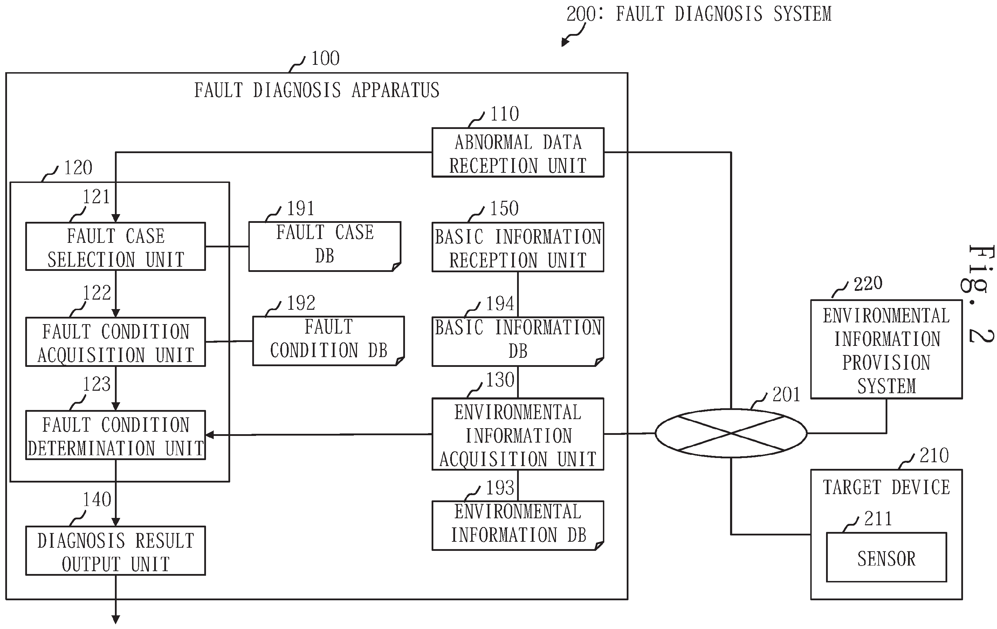

A configuration of the fault diagnosis system 200 will be described based on Fig. 2.

The fault diagnosis system 200 includes the fault diagnosis apparatus 100, a target device 210, and an environmental information provision system 220.

The fault diagnosis apparatus 100 communicates with the target device 210 and the environmental information provision system 220 via a communication network 201.

In the fault diagnosis apparatus 100, the fault diagnosis unit 120 includes elements such as a fault case selection unit 121, a fault condition acquisition unit 122, and a fault condition determination unit 123.

The target device 210 is a device that is subject to fault diagnosis.

The target device 210 has a communication function and includes one or more types of sensors 211.

The target device 210 outputs abnormal data when an anomaly occurs.

The abnormal data includes abnormal information and sensor data.

The abnormal information is information related to the anomaly that has occurred in the target device 210. The abnormal information indicates an error code or a symptom of the device, for example.

The sensor data is data acquired by the one or more types of sensors 211.

The anomaly is a symptom indicating a state that is not normal, and is caused by a fault. Examples of the anomaly are performance degradation, vibration, abnormal noise, and an error code display.

The fault is a cause that leads to an abnormal symptom. Examples of the fault are component deterioration, frost adhesion, and embrittlement by chemical substances.

The environmental information provision system 220 is one or more computer systems that provide various environmental information.

The environmental information is information related to an external environment of the target device 210.

A fault case database 191, a fault condition database 192, an environmental information database 193, and a basic information database 194 are stored in the memory unit 190.

The fault case database 191 is a database in which one or more pieces of fault case data are registered.

The fault case data indicates a relation between abnormal information and a fault case. The fault case data is generated based on knowledge of a designer or other factors according to a model type of the target device 210 and a configuration of the target device 210

The abnormal information is information related to an anomaly that may occur in the target device 210.

The fault case is information related to a fault that may occur in the target device 210. The fault case indicates a cause of the anomaly that may occur in the target device 210, for example.

The fault condition database 192 is a database in which one or more pieces of fault condition data are registered.

The fault condition data indicates a relation between a fault case and a fault condition.

The fault condition indicates a condition of the sensor data or the environmental information, as a condition under which the fault case occurs. The fault condition indicates a threshold value, a condition equation, or a sensor data pattern, for example.

The environmental information database 193 stores the environmental information acquired from the environmental information provision system 220.

The basic information database 194 stores basic information of the target device 210 and basic information of the environmental information provision system 220.

A user inputs each of the basic information of the target device 210 and the basic information of the environmental information provision system 220 into the fault diagnosis apparatus 100. The basic information reception unit 150 receives and stores the inputted basic information in the basic information database 194.

The basic information of the target device 210 indicates position information of the target device 210. Further, the basic information of the target device 210 indicates the model type, the configuration, and the like of the target device 210.

The position information of the target device 210 indicates a geographical position (an installation position) where the target device 210 is installed. The position information indicates latitude and longitude, an address, or a place name, for example. The position information may also indicate regional information. The regional information indicates a river flooding warning area, a sediment disaster hazard area, or the like.

The basic information of the environmental information provision system 220 indicates provider information. The provider information specifies a provider of various environmental information and indicates information necessary for accessing the provider.

### *** Description of Operation ***

An operation procedure of the fault diagnosis apparatus 100 is equivalent to a fault diagnosis method. Further, the operation procedure of the fault diagnosis apparatus 100 is equivalent to a processing procedure by the fault diagnosis program.

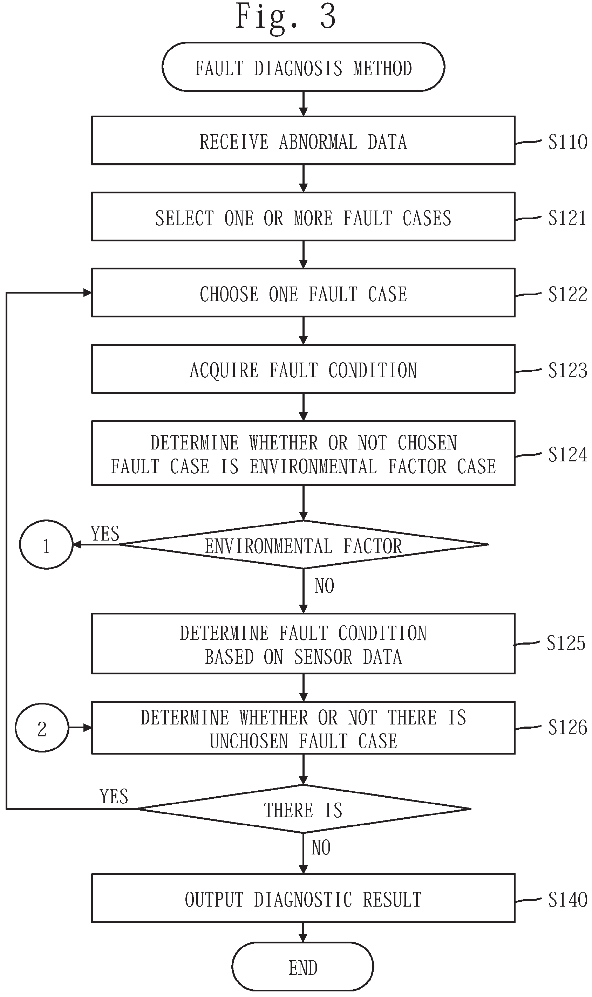

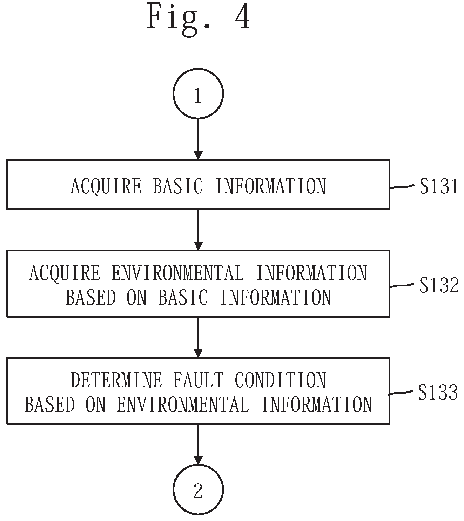

The fault diagnosis method will be described based on Figs. 3 and 4.

In step S110, the abnormal data reception unit 110 receives abnormal data.

When an anomaly occurs in the target device 210, the target device 210 sends the abnormal data, and the abnormal data reception unit 110 receives the abnormal data, for example.

The user inputs the abnormal data of the target device 210 into the fault diagnosis apparatus 100, and the abnormal data reception unit 110 receives the inputted abnormal data, for example.

In step S121, the fault case selection unit 121 selects from the fault case database 191, one or more fault cases associated with the same abnormal information as the abnormal information included in the abnormal data.

In step S122, the fault condition acquisition unit 122 chooses one unchosen fault case from the selected one or more fault cases.

In step S123, the fault condition acquisition unit 122 acquires from the fault condition database 192, a fault condition associated with the same fault case as the chosen fault case.

In step S124, the fault condition determination unit 123 determines whether or not the chosen fault case is an environmental factor case.

The environmental factor case is a fault case due to an external environment of the target device 210.

Determination is performed as follows.

A classification is given to the fault case. The fault condition determination unit 123 determines whether or not the fault case is the environmental factor case based on the classification given to the fault case.

The classification such as "weather", "surrounding environment", "incidental event", "man-made event", "device" or "software" is given to the fault case, for example. "Weather", "surrounding environment", "incidental event" and "man-made event" are classifications that belong to the environmental factor. "Device" and "software" are classifications that do not belong to the environmental factor.

The fault condition determination unit 123 determines whether or not the classification given to the fault case is a classification that belongs to the environmental factor. A list (an environmental factor classification list) of classifications that belong to the environmental factor is stored in the memory unit 190 in advance, for example. Then, when the same classification as the classification given to the fault case is included in the environmental factor classification list, the fault condition determination unit 123 determines that the classification given to the fault case is the classification that belongs to the environmental factor. When the classification given to the fault case is the classification that belongs to the environmental factor, the fault condition determination unit 123 determines that the fault case is the environmental factor case.

When the chosen fault case is the environmental factor case, the process proceeds to step S131.

When the chosen fault case is not the environmental factor case, the process proceeds to step S125.

In step S125, the fault condition determination unit 123 determines whether or not the acquired fault condition is satisfied based on the sensor data included in the abnormal data.

That is, the fault condition determination unit 123 determines whether or not the sensor data meets the fault condition.

The fault condition determination unit 123 may perform determination using a learned model. The learned model is generated in advance by machine learning.

After step S125, the process proceeds to step S126.

The description will be continued from step S131 based on Fig. 4.

In step S131, the environmental information acquisition unit 130 acquires from the basic information database 194, the basic information of the target device 210 and the basic information of the environmental information provision system 220.

Then, the environmental information acquisition unit 130 acquires the position information of the target device 210 from the basic information of the target device 210.

In step S132, the environmental information acquisition unit 130 accesses the environmental information provision system 220 using the basic information of the environmental information provision system 220.

Then, the environmental information acquisition unit 130 acquires from the environmental information provision system 220, the environmental information at the installation position of the target device 210, using the position information of the target device 210.

In step S133, the fault condition determination unit 123 determines whether or not the acquired fault condition is satisfied based on the acquired environmental information.

That is, the fault condition determination unit 123 determines whether or not the environmental information meets the fault condition.

The fault condition determination unit 123 may also perform determination using the learned model.

After step S133, the process proceeds to step S126.

Returning to Fig. 3, the description will be continued from step S126.

In step S126, the fault condition determination unit 123 determines whether or not there is an unchosen fault case among the one or more selected fault cases. When there is the unchosen fault case among the one or more selected fault cases, the process proceeds to step S122.

When there is no unchosen fault case among the one or more selected fault cases, the process proceeds to step S140.

In step S140, the diagnosis result output unit 140 outputs a diagnosis result.

The diagnosis result indicates information related to a result of determination by the fault condition determination unit 123. The diagnosis result indicates the fault case in which the abnormal information and the fault condition have been satisfied, for example.

The fault case indicated in the diagnosis result is the fault case that is highly likely to have caused the occurrence of the anomaly.

The diagnosis result output unit 140 displays the diagnosis result on the display, for example.

After step S140, the process ends.

### *** Description of Operation Examples ***

It is considered that heating performance decreases when frost adheres to an outdoor unit of an air conditioning system.

The occurrence of frost can be estimated using the environmental information such as outdoor temperature, humidity, and wind speed. Therefore, the environmental information is acquired from the environmental information provision system 220.

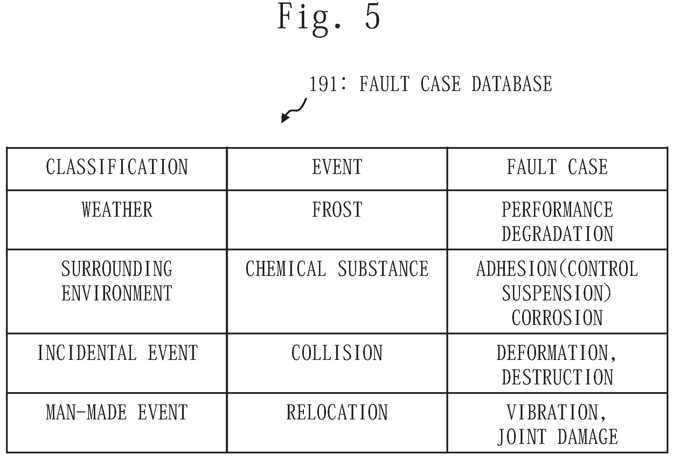

Fig. 5 illustrates an example of the fault case database 191.

Four pieces of fault case data are registered in the fault case database 191. The fault case data indicates a classification and an event of the fault case.

The first fault case data indicates a fault case in which frost occurs due to weather (an external environment), and the occurrence of fog causes degradation in heating performance. This fault case is referred to as a performance degradation fault case.

The fault condition database 192 has registered fault condition data indicating a fault condition of the performance degradation fault case. This fault condition data indicates a condition of the environmental information about an environment where frost may occur, as the fault condition. The fault condition is indicated numerical formula, for example. The fault condition may be applied with a classification method using clustering by machine learning or the like.

When the abnormal information indicates the degradation in heating performance, the fault case selection unit 121 selects the performance degradation fault case from the fault case database 191.

When the performance degradation fault case is selected, the fault condition acquisition unit 122 acquires from the fault condition database 192, the fault condition associated with the performance degradation fault case.

Since the selected fault case is an environmental factor fault case, the environmental information acquisition unit 130 acquires the environmental information. Then, the fault condition determination unit 123 determines whether or not the fault condition associated with the performance degradation fault case is satisfied based on the acquired environmental information.

Thereby, even without sensor data related to frost, it is possible to estimate that an anomaly may have occurred due to the occurrence of frost.

In such a manner, it is possible to perform an appropriate diagnosis by utilizing knowledge of an expert related to a relation between a symptom of fault and an environmental factor.

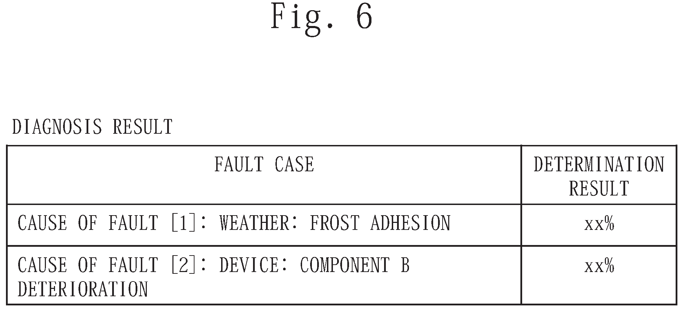

Fig. 6 illustrates an example of the diagnosis result.

The diagnosis result indicates each determination result of one or more fault cases.

The determination result indicates possibility (proportion or the like) that the fault indicated in the fault case has caused the occurrence of the anomaly.

### *** Effects of Embodiment 1 ***

Embodiment 1 relates to a fault diagnosis system that estimates a cause of fault due to an environmental factor.

The cause (cause) leads to a certain thing, a state, or a change.

The factor (Main Factor) is a primary cause that has generated a thing. The environmental factor means that an environment is the primary cause.

Estimating is an act of estimating possibility of a certain event based on data and a condition. Since it is unknown whether or not the certain event is actually occurring, the occurrence of the event is estimated based on the data and the condition.

Diagnosing is an act of estimating and determining each of a plurality of causes of faults. That is, the most possible cause of possible faults is diagnosed.

In order to diagnose a fault due to an environmental factor that cannot be grasped in the sensor data of the target device 210, the fault diagnosis apparatus 100 acquires external environmental information and estimates an environment that leads to the fault. Thereby, it is possible to perform an estimation of a fault due to an environmental factor.

The diagnosis result output unit 140 outputs a diagnosis result. Thereby, a maintenance worker can determine a corresponding point of a fault due to an environmental factor.

According to Embodiment 1, it is possible to estimate possibility of a fault due to an environmental factor without adding a new sensor necessary for grasping the environment.

### Embodiment 2.

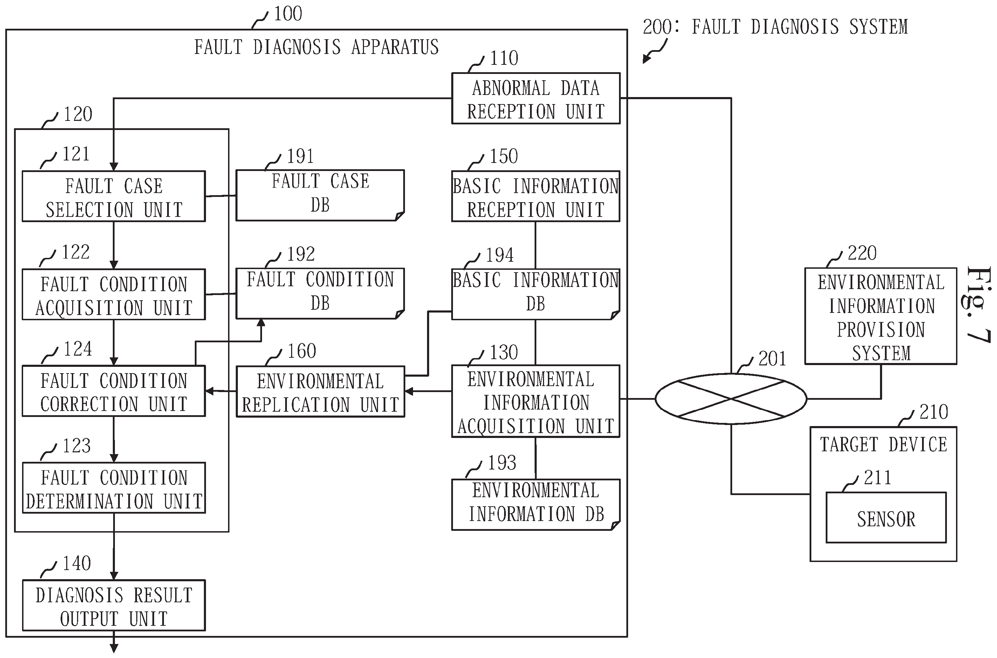

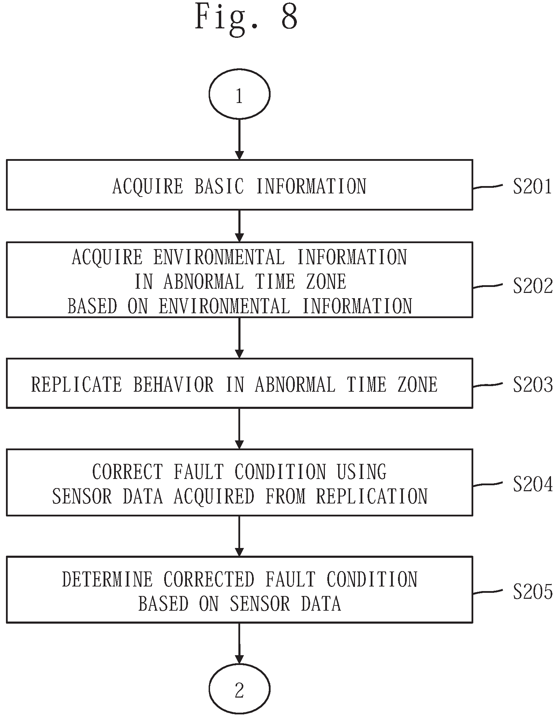

As for an embodiment for correcting the fault condition, differences from Embodiment 1 will be mainly described based on Figs. 7 and 8.

### *** Description of Configuration ***

A configuration of the fault diagnosis apparatus 100 will be described based on Fig. 7.

The fault diagnosis apparatus 100 further includes an element that is an environmental replication unit 160.

The fault diagnosis program further causes the computer to function as the environmental replication unit 160.

The fault diagnosis unit 120 further includes an element that is a fault condition correction unit 124.

### *** Description of Operation ***

The fault diagnosis method will be described based on Figs. 3 and 8.

In Fig. 3, steps S110, S121 to S126, and S140 are as described in Embodiment 1.

In step S124, when the chosen fault case is an environmental factor case, the process proceeds to step S201 (refer to Fig. 8).

In step S201, the environmental information acquisition unit 130 acquires from the basic information database 194, the basic information of the target device 210 and the basic information of the environmental information provision system 220.

Then, the environmental information acquisition unit 130 acquires the position information of the target device 210 from the basic information of the target device 210.

Step S201 is the same as step S131 in Embodiment 1.

In step S202, the environmental information acquisition unit 130 accesses the environmental information provision system 220 using the basic information of the environmental information provision system 220.

Then, the environmental information acquisition unit 130 acquires from the environmental information provision system 220, the environmental information in an abnormal time zone at the installation position of the target device 210, using the position information of the target device 210.

The abnormal time zone is a time zone in which an anomaly has occurred in the target device 210. Specifically, the abnormal time zone is a time zone that includes a time (an abnormal occurrence time) when the anomaly has occurred in the target device 210. The abnormal time zone is a time zone up until the abnormal occurrence time, and has a predetermined length of time, for example. The abnormal occurrence time is a time when the abnormal data has been received in step S110, for example.

In step S203, the environmental replication unit 160 replicates a behavior of the target device 210 in the abnormal time zone, using the environmental information acquired in step S202.

At this time, the environmental replication unit 160 simulates operation of the target device 210 in the chosen fault case.

The behavior of the target device 210 is replicated using a physical formula or a calculation formula.

In step S203, the sensor data in the abnormal time zone is acquired.

In step S204, the fault condition correction unit 124 corrects the fault condition acquired in step S123 using the sensor data acquired in step S203.

In step S205, the fault condition determination unit 123 determines whether or not the corrected fault condition is satisfied based on the sensor data included in the abnormal data.

A determination method is the same as that in step S125.

After step S205, the process proceeds to step S126 (refer to Fig. 3).

### *** Description of Operation Examples ***

An operation example will be described using a fault affected by an external temperature (heat) as an example.

In conventional fault diagnosis, it is considered to perform fault diagnosis using sensor data of a device.

However, when there is no sensor that grasps the external environment of the device, a case is considered in which a behavior of the sensor data is affected by the temperature of the external environment, and a condition of fault diagnosis is not met.

Then, in determination of fault diagnosis, external temperature information is acquired as the environmental information for a fault that is affected by the external temperature. Then, a behavior of the device at the time of fault is replicated using the environmental information in the time zone in which the fault has occurred. Thereby, during fault diagnosis, it is possible to generate a condition (a behavior of sensor data) for the fault diagnosis that considers the environmental information.

When pattern matching is performed between the actual waveform data and a sensor data pattern where the behavior of the device at the time of fault is replicated, it is possible to use the replicated data as the condition for the fault diagnosis.

### *** Effects of Embodiment 2 ***

In Embodiment 2, a determination condition is corrected in a case where an environmental factor affects the determination condition of the sensor data of the device.

According to Embodiment 2, by replicating the environment as necessary for the fault condition in which the environmental factor is not considered in advance, it is possible to generate data on which the fault condition according to the environment is based. Further, even in a case where there is no sensor data of the device, it is possible to correct a condition for fault diagnosis using the environmental information. Therefore, it is possible to improve diagnosis accuracy.

### Embodiment 3.

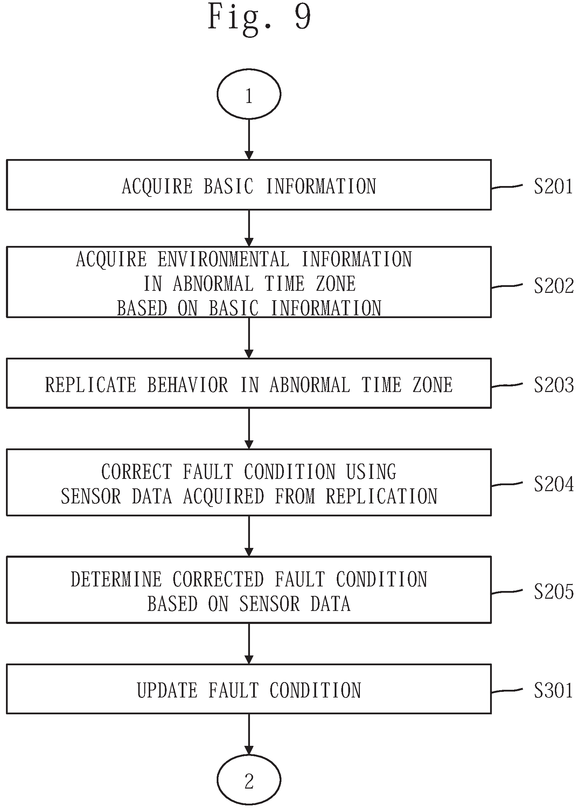

As for an embodiment for updating the fault condition, differences from Embodiment 2 will be mainly described based on Fig. 9.

### *** Description of Configuration ***

A configuration of the fault diagnosis apparatus 100 is the same as the configuration in Embodiment 2.

### *** Description of Operation ***

The fault diagnosis method will be described based on Figs. 3 and 9

In Fig. 3, steps S110, S121 to S126, and S140 are as described in Embodiment 1.

In step S124, when the chosen fault case is an environmental factor case, the process proceeds to step S201 (refer to Fig. 9).

In Fig. 9, steps S201 to S205 are as described in Embodiment 2.

After step S205, the process proceeds to step S301.

In step S301, the fault condition correction unit 124 updates to the corrected fault condition, the fault condition acquired in step S123 among fault conditions indicated in the fault condition database 192.

After step S301, the process proceeds to step S126 (refer to Fig. 3).

### *** Effects of Embodiment 3 ***

In Embodiment 3, a result obtained from replication of a behavior is registered in the fault condition database 192. Thereby, it is possible to automatically update the fault condition database 192 with the determination condition in which the environment is considered. Therefore, it is possible to reduce the burden of preparing a model in advance.

### Embodiment 4.

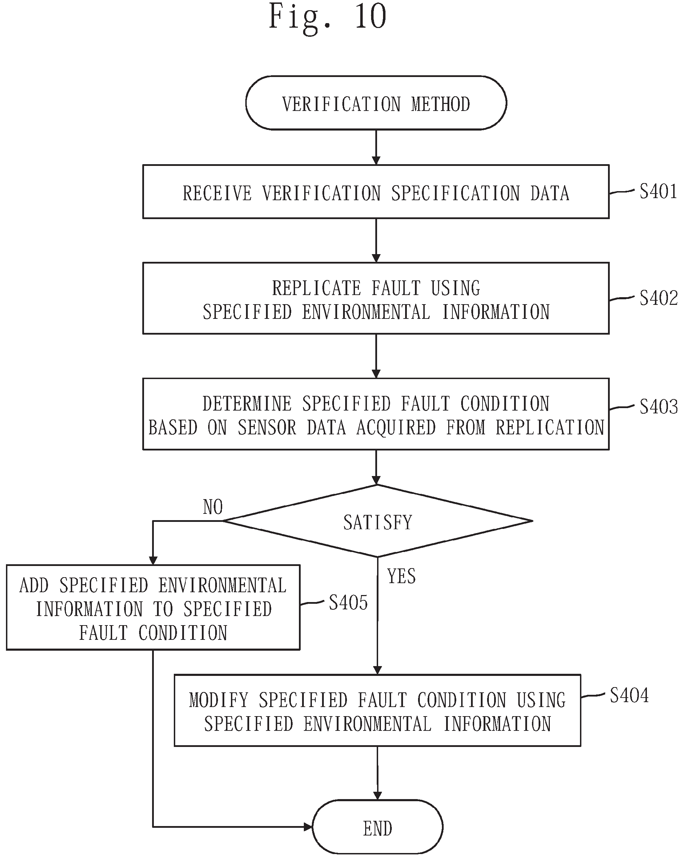

As for an embodiment for verifying the fault condition, differences from Embodiments 1 to 3 will be mainly described based on Figs. 10 to 12.

### *** Description of Configuration ***

A configuration of the fault diagnosis apparatus 100 is the same as the configuration in Embodiment 2.

### *** Description of Operation ***

A verification method will be described based on Fig. 10. The verification method is a part of the fault diagnosis method.

In step S401, the environmental replication unit 160 receives verification specification data.

When the user inputs the verification specification data into the fault diagnosis apparatus 100, the environmental replication unit 160 receives the inputted verification specification data, for example.

The verification specification data specifies both the environmental information subject to verification and the fault condition subject to verification.

The environmental information specified in the verification specification data is referred to as specified environmental information.

The fault condition specified in the verification specification data is referred to as a specified fault condition.

In step S402, the environmental replication unit 160 replicated a behavior of a fault of the target device 210 using the specified environmental information.

A replication method is the same as the method in step S203 of Embodiment 2.

According to Step S402, the sensor data at the time of fault is acquired.

In step S403, the fault condition determination unit 123 determines whether or not the specified fault condition is satisfied based on the sensor data acquired in step S402.

The specified fault condition is acquired from the fault condition database 192.

The determination method is the same as the method in step S125 of Embodiment 1.

When the specified fault condition is satisfied, the process proceeds to step S404.

When the specified fault condition is not satisfied, the process proceeds to step S405.

In step S404, the fault condition correction unit 124 modifies the specified fault condition using the specified environmental information.

Thereby, the specified fault condition indicated in the fault condition database 192 is updated.

In step S405, the fault condition correction unit 124 adds the specified environmental information to the specified fault condition.

Thereby, the specified fault condition indicated in the fault condition database 192 is updated.

### *** Effects of Embodiment 4 ***

In Embodiment 4, an expected environmental range is automatically verified. Thereby, a behavior and a range of the sensor data that are affected by the environment become clear, and it is possible to correspond to a condition decision for fault diagnosis other than pattern matching.

According to Embodiment 4, it is possible to automatically update the fault condition database 192.

### *** Supplements to Embodiment 4 ***

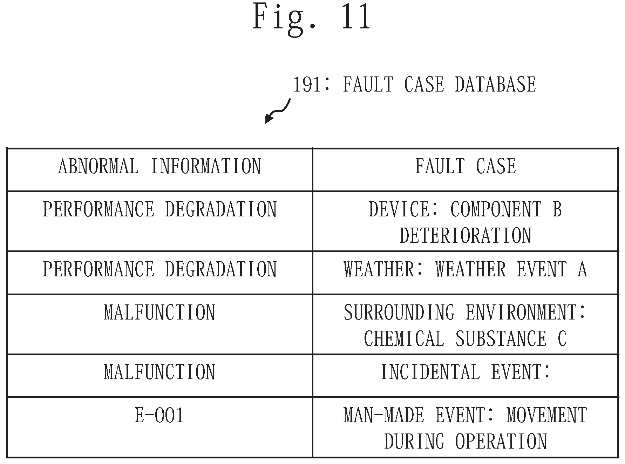

Fig. 11 illustrates an example of the fault case database 191.

The fault case database 191 retains data associated with the fault case that is conceivable from the abnormal information.

It is assumed that the abnormal information indicates performance degradation, for example. In this case, "device: component B deterioration" and "weather: weather event A" are registered in the fault case database 191 as fault cases associated with the abnormal information.

A plurality of fault cases may be assigned to a single piece of abnormal information, and a single fault case may be associated with a plurality of pieces of abnormal information.

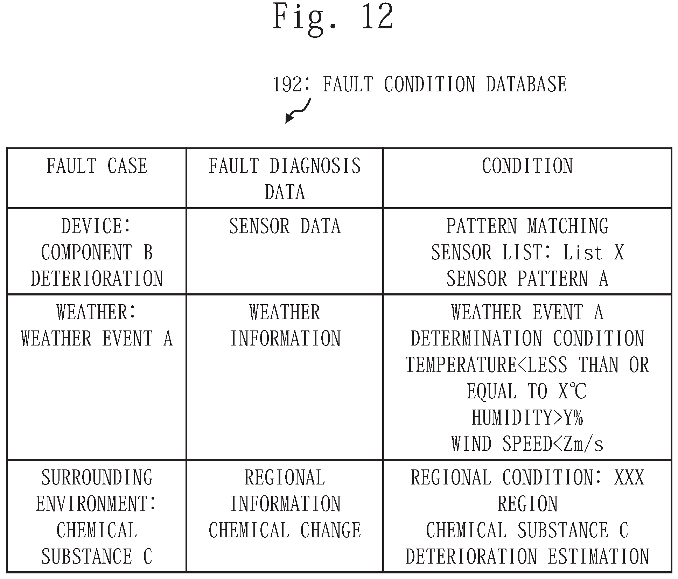

Fig. 12 illustrates an example of the fault condition database 192.

The fault condition database 192 retains a data type and a determination condition to be used for fault diagnosis according to the fault case.

Fault diagnosis data can specify data used for diagnosis to be modified depending on the fault case. When the sensor data of the device is targeted, the sensor data is chosen as the fault diagnosis data, and a list of sensors to be diagnosed at the time of fault can be specified as the determination condition. A pattern of the sensor data at the time of fault is associated as a sensor pattern. Thereby, it is possible to diagnose a fault based on the sensor data of the device.

It is assumed that something other than the sensor of the device is used. When the weather event A is a fault factor as the fault case, weather information is specified as the fault diagnosis data, and the determination condition for determining an event of the weather event A is registered, for example. Conditions such as the temperature being less than or equal to a certain degree, the humidity being equal to or greater than a certain percent, and the wind speed being a certain meter per second are registered, for example. Thereby, it is possible to determine whether or not the data acquired from the weather information meets these conditions.

A case other than the weather information is assumed. When the fault case is due to a chemical substance that depends on the surrounding environment, a case that depends on regionality may be considered, for example. Therefore, regional information for determining whether or not an area is applicable, is used as the fault diagnosis data.

Further, since a chemical change occurs due to a chemical substance, it is assumed that the chemical change leads to a fault. Therefore, deterioration estimation which estimates how much affection is received due to the corresponding chemical substance, is specified as the determination condition. Thereby, it is possible to estimate such a fault.

It is possible to register not only one method but also a plurality of different methods as the determination condition. Thereby, it is possible to estimate the environment from multiple perspectives, using verification of the determination method by machine learning, determination by environmental replication using simulations, and the like, other than determination by a condition formula. Therefore, it is possible to increase credibility of an estimation result.

### Embodiment 5.

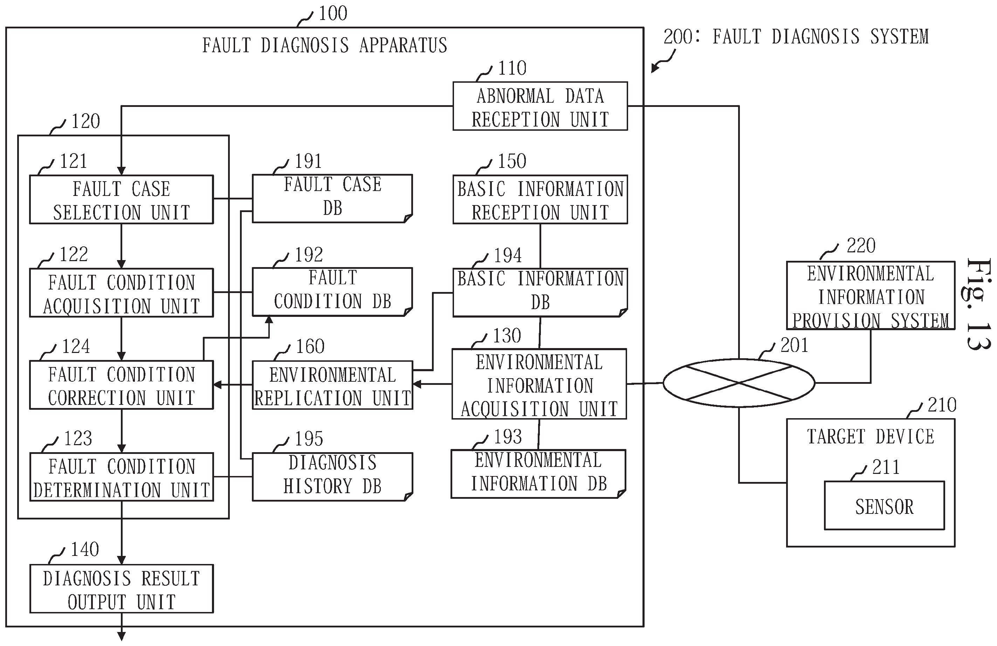

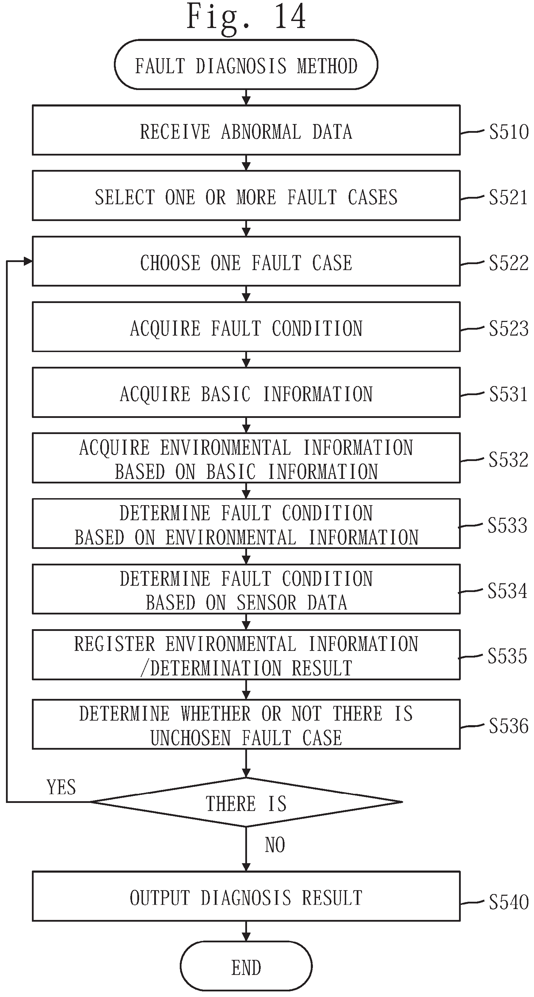

As for an embodiment for leaving a diagnosis history, differences from Embodiments 1 to 4 will be mainly described based on Figs. 13 and 14.

### *** Description of Configuration ***

A configuration of the fault diagnosis apparatus 100 will be described based on Fig. 13.

A diagnosis history database 195 is stored in the memory unit 190.

### *** Description of Operation ***

The fault diagnosis method will be described based on Fig. 14.

Step S510 is the same as step S110 in Embodiment 1.

Steps S521 to S523 are the same as steps S121 to S123 in Embodiment 1.

Steps S531 to S533 are the same as steps S131 to S133 in Embodiment 1.

Step S534 is the same as step S125 in Embodiment 1.

In step S535, the fault condition determination unit 123 registers the environmental information acquired in step S532, the determination result of step S533 and the determination result of step S534 into the diagnosis history database 195 in association with each other.

Step S536 is the same as step S126 in Embodiment 1.

Step S540 is the same as step S140 in Embodiment 1.

### *** Effects of Embodiment 5 ***

It is assumed that the abnormal information and the fault case due to the environmental factor are not associated with the fault case database 191 in advance. That is, it is assumed that a relation between the fault case and the environmental factor is unknown.

In this case, regardless of the environmental information in the fault case database 191, by ensuring that all pieces of environmental information data are acquired and a history is retained during diagnosis, all environments in which collection and determination are possible are estimated. Then, an estimation result, abnormal data (sensor data and abnormal information) acquired from the target device 210, and data related to the relevance of the estimation result of the environment, are collected.

By collecting such data in the diagnosis history database 195, it is possible to newly discover a relation between the environmental factor and the abnormal information, the sensor data of the device, and the environmental data. Then, it is possible to easily enrich the fault case database 191 related to the fault case due to the environmental factor.

### *** Supplements to Embodiments ***

The embodiments enable estimation of a fault due to an environmental factor even in a case where the device does not have a sensor that grasps the environment.

The abnormal data reception unit 110 receives the sensor data of the target device 210.

The basic information reception unit 150 receives information related to the device, such as the installation position of the device.

The fault case database 191 has a table that associates informations indicating anomalies in the device, with fault cases related to the informations.

The fault condition database 192 stores fault conditions that associate fault cases with sensor patterns at the times of faults of the device or fault conditions, and conditions for estimating whether or not the environment surrounding the device is an environment that leads to a fault.

Based on the information of the anomaly acquired from the abnormal data reception unit 110, the fault case selection unit 121 refers to the associated table in the fault case database 191 to select the fault case for data determination.

In the basic information database 194, geographic position information where the device is installed is associated with information indicating where to acquire an environmental information service.

The environmental information acquisition unit 130 acquires data that cannot be collected from the device from the environmental information service or the like, and acquires information from an associated source in the basic information database 194.

The fault condition determination unit 123 estimates whether or not the environment leads to a fault, using information that estimates the environment acquired from the fault condition database 192 and the collected data of the environmental information service.

The fault diagnosis unit 120 is configured with the fault case selection unit 121, the fault condition acquisition unit 122, and the fault condition determination unit 123.

The diagnosis result output unit 140 displays a cause of fault of the device determined by the fault diagnosis unit 120.

The environmental replication unit 160 replicates a behavior of the device based on a calculation formula or physical computation, using the data acquired by the environmental information acquisition unit 130, and generates a behavioral model.

The fault condition correction unit 124 takes into account a difference in results obtained by the environmental replication unit 160 for the behavioral model of the device at the time of fault registered in the fault condition database 192, as an allowable error, and estimates the cause of fault under the condition of fault estimation of the behavioral model due to the environmental factor.

The fault condition correction unit 124 improves the accuracy of the determination condition of the fault condition determination unit 123 by updating the fault condition database 192 using the obtained results.

In the fault condition database 192, a data choosing function is possible that choses fault diagnosis target data corresponding to the fault case, and it is possible to specify one or a plurality of determination conditions depending on the fault diagnosis target data. Further, it is possible to specify data other than the sensor data of the device as the fault diagnosis target data. Thereby, it is possible to specify data related to fault and the diagnosis method even in a case where there is no sensor data in the device.

The diagnosis history database 195 stores anomalies of the device related to fault, the sensor data of the device, and results of estimating environmental factors.

Relations between the anomalies of the device, the data, and faults due to the environmental factors accumulate, and it is possible to easily update fault cases due to the environmental factors.

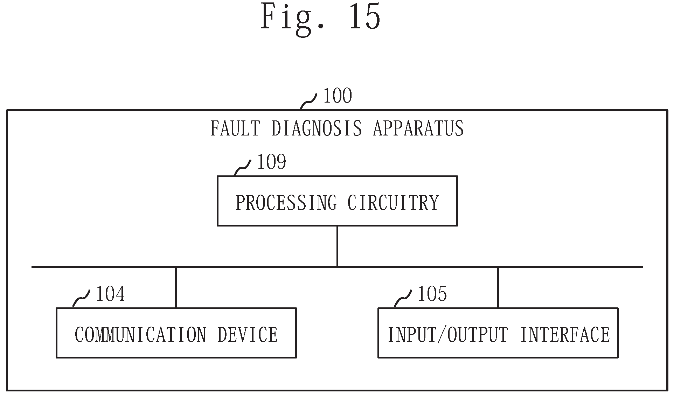

A hardware configuration of the fault diagnosis apparatus 100 will be described based on Fig. 15.

The fault diagnosis apparatus 100 includes processing circuitry 109.

The processing circuitry 109 is a piece of hardware that implements the abnormal data reception unit 110, the fault diagnosis unit 120, the environmental information acquisition unit 130, the diagnosis result output unit 140, the basic information reception unit 150, and the environmental replication unit 160.

The processing circuitry 109 may be dedicated hardware, or may be the processor 101 that executes programs stored in the memory 102.

When the processing circuitry 109 is the dedicated hardware, the processing circuitry 109 is, for example, a single circuit, a compound circuit, a programmed processor, a parallel programmed processor, an ASIC, an FPGA, or a combination of these.

ASIC is an abbreviation for Application Specific Integrated Circuit.

FPGA is an abbreviation for Field Programmable Gate Array.

In the processing circuitry 109, some functions may be implemented by dedicated hardware, while the remaining functions may be implemented by software or firmware.

In such a manner, a function of the fault diagnosis apparatus 100 can be implemented by hardware, software, firmware, or a combination of these.

Each of the embodiments is an example of a preferable embodiment and is not intended to limit the technical scope of the present disclosure. Each of the embodiments may be implemented partially, or may be implemented in combination with another embodiment. The procedures described using the flowcharts or the like may be suitably modified.

"Unit" of each of the elements of the fault diagnosis apparatus 100 may be interpreted as "process", "procedure", "circuit" or "circuitry".

### Reference Signs List

100: fault diagnosis apparatus; 101: processor; 102: memory; 103: auxiliary storage device; 104: communication device; 105: input/output interface; 109: processing circuitry; 110: abnormal data reception unit; 120: fault diagnosis unit; 121: fault case selection unit; 122: fault condition acquisition unit; 123: fault condition determination unit; 124: fault condition correction unit; 130: environmental information acquisition unit; 140: diagnosis result output unit; 150: basic information reception unit; 160: environmental replication unit; 190: memory unit; 191: fault case database; 192: fault condition database; 193: environmental information database; 194: basic information database; 195: diagnosis history database; 200: fault diagnosis system; 201: communication network; 210: target device; 211: sensor; 220: environmental information provision system.

## Claims

1. A fault diagnosis apparatus comprising:
an abnormal data reception unit to receive abnormal data that includes abnormal information of an anomaly that has occurred in a target device and sensor data acquired in the target device;
a fault case selection unit to select from a fault case database indicating relations between abnormal informations of anomalies that may occur in the target device and fault cases, a fault case related to the same abnormal information as the abnormal information included in the abnormal data;
a fault condition acquisition unit to acquire from a fault condition database indicating relations between fault cases and fault conditions, a fault condition associated with the same fault case as the selected fault case;
an environmental information acquisition unit to acquire environmental information of an external environment of the target device;
a fault condition determination unit to determine whether or not the acquired fault condition is satisfied based on the acquired environmental information or the sensor data included in the abnormal data; and
a diagnosis result output unit to output a diagnosis result indicating information related to a determination result.

2. The fault diagnosis apparatus according to claim 1, wherein
the fault condition determination unit, when the selected fault case is an environmental factor case that is a fault case caused by the external environment of the target device, determines whether or not the acquired fault condition is satisfied based on the acquired environmental information, and
when the selected fault case is not the environmental factor case, determines whether or not the acquired fault condition is satisfied based on the sensor data included in the abnormal data.

3. The fault diagnosis apparatus according to claim 1, wherein
the fault diagnosis apparatus includes an environmental replication unit and a fault condition correction unit,
the environmental information acquisition unit acquires the environmental information in an abnormal time zone where an anomaly has occurred in the target device,
the environmental replication unit replicates a behavior of the target device in the abnormal time zone using the environmental information in the abnormal time zone, and acquires sensor data in the abnormal time zone,
the fault condition correction unit corrects the acquired fault condition using the sensor data in the abnormal time zone, and
the fault condition determination unit determines whether or not the corrected acquired fault condition is satisfied based on the sensor data included in the abnormal data.

4. The fault diagnosis apparatus according to claim 3, wherein
the fault condition correction unit updates the fault condition acquired from among fault conditions indicated in the fault condition database to a corrected acquired fault condition.

5. The fault diagnosis apparatus according to claim 1, wherein
the fault diagnosis apparatus includes an environmental replication unit and a fault condition correction unit,
the environmental replication unit replicates a behavior of a fault of the target device and acquires sensor data at the time of fault, using specified environmental information,
the fault condition determination unit determines whether or not a specified fault condition indicated in the fault condition database is satisfied based on the sensor data at the time of fault, and
the fault condition correction unit updates the specified fault condition indicated in the fault condition database based on the determination result for the specified fault condition and the specified environmental information.

6. The fault diagnosis apparatus according to claim 1, wherein
the fault condition determination unit determines whether or not the fault condition acquired based on the acquired environmental information is satisfied, determines whether or not the fault condition acquired based on the sensor data included in the abnormal data is satisfied, and registers the acquired environmental information and the determination result in a diagnosis history database.

7. A fault diagnosis method comprising:
receiving abnormal data that includes abnormal information of an anomaly that has occurred in a target device and sensor data acquired in the target device;
selecting from a fault case database indicating relations between abnormal informations of anomalies that may occur in the target device and fault cases, a fault case related to the same abnormal information as the abnormal information included in the abnormal data;
acquiring from a fault condition database indicating relations between fault cases and fault conditions, a fault condition associated with the same fault case as the selected fault case;
acquiring environmental information of an external environment of the target device;
determining whether or not the acquired fault condition is satisfied based on the acquired environmental information or the sensor data included in the abnormal data; and
outputting a diagnosis result indicating information related to a determination result.

8. A fault diagnosis program for causing a computer to execute:
an abnormal data reception process to receive abnormal data that includes abnormal information of an anomaly that has occurred in a target device and sensor data acquired in the target device;
a fault case selection process to select from a fault case database indicating relations between abnormal informations of anomalies that may occur in the target device and fault cases, a fault case related to the same abnormal information as the abnormal information included in the abnormal data;
a fault condition acquisition process to acquire from a fault condition database indicating relations between fault cases and fault conditions, a fault condition associated with the same fault case as the selected fault case;
an environmental information acquisition process to acquire environmental information of an external environment of the target device;
a fault condition determination process to determine whether or not the acquired fault condition is satisfied based on the acquired environmental information or the sensor data included in the abnormal data; and
a diagnosis result output process to output a diagnosis result indicating information related to a determination result.

9. A fault diagnosis system comprising:
a fault case database indicating relations between abnormal informations of anomalies that may occur in a target device and fault cases;
a fault condition database indicating relations between fault cases and fault conditions;
an abnormal data reception unit to receive abnormal data that includes abnormal information of an anomaly that has occurred in the target device and sensor data acquired in the target device;
a fault case selection unit to select from the fault case database, a fault case related to the same abnormal information as the abnormal information included in the abnormal data;
a fault condition acquisition unit to acquire from the fault condition database, a fault condition associated with the same fault case as the selected fault case;
an environmental information acquisition unit to acquire environmental information of an external environment of the target device;
a fault condition determination unit to determine whether or not the acquired fault condition is satisfied based on the acquired environmental information or the sensor data included in the abnormal data; and
a diagnosis result output unit to output a diagnosis result indicating information related to a determination result.
